# FASCICULE DE BREVET EUROPEEN

(11) **EP 3 081 823 B1**
(45) Date de publication et mention de la délivrance du brevet: **27.11.2019**
(21) Numéro de dépôt: 16165183.1
(22) Date de dépôt: 13.04.2016
(51) Int. Cl.: F16C 43/06, F16C 33/58, F16C 19/38, F16C 23/08, F16C 33/78

(54) **UNITE DE ROULEMENT ET PROCEDE POUR FABRIQUER UNE TELLE UNITE DE ROULEMENT**
LAGERANORDNUNG UND VERFAHREN ZUR HERSTELLUNG EINER SOLCHEN LAGERANORDNUNG
BEARING UNIT AND METHOD FOR THE MANUFACTURE OF SUCH BEARING UNIT

(30) Priorité: 14.04.2015 FR 1553270
(43) Date de publication de la demande: 19.10.2016
(73) Titulaire: NTN-SNR ROULEMENTS, 74000 Annecy (FR)
(72) Inventeur: GARNIER, Alexis, 38180 Seyssins (FR); ROBUSTO, Massimiliano, 10090 GASSINO TORINESE (IT)
(74) Mandataire: Derambure Conseil

(56) Documents cités:
- WO-A1-2013/062904
- JP-A- H09 177 771
- JP-A- 2005 061 594
- JP-A- 2005 344 848
- JP-A- 2006 308 043
- US-A- 2 946 633

## Description

L'invention concerne le domaine des unités de roulement et des procédés pour fabriquer de telles unités de roulement et, en particulier celui des unités de roulement comprenant deux bagues, une cage et une double rangée de corps roulants.

Plus précisément, l'invention concerne le domaine du remplissage et du montage des corps roulants de telles unités de roulement dans la cage qui est destinée à espacer entre eux les corps roulants. L'invention peut s'appliquer tout particulièrement aux unités de roulement employées dans la mécanique lourde, où les portées sont difficiles à aligner et où les charges radiales sont importantes, ou encore dans des domaines soumis à des conditions sévères de fonctionnement. Toutefois, l'invention n'est pas limitée à ces domaines et peut également trouver des applications dans d'autres domaines.

Il est connu de l'art antérieur différentes solutions visant à monter des corps roulants dans une unité de roulement comprenant une cage, notamment par l'intermédiaire d'une encoche prévue pour le passage des corps roulants.

Notamment, la publication EP1219842A1 se rapporte à une unité de roulement comprenant une unique rangée de corps roulants. Les corps roulants sont reçus dans des alvéoles d'une cage prévue entre une bague intérieure et une bague extérieure de l'unité de roulement. Les bagues intérieure et extérieure définissent un espace intérieur, dans lequel est disposée la cage. Chacune des bagues intérieure et extérieure comporte une encoche traversant le collet des bagues et permettant l'introduction successive des corps roulants dans l'espace intérieur.

Une telle réalisation permet le montage d'une unité de roulement comprenant une unique rangée de corps roulants. En outre, une telle réalisation implique la mise en œuvre d'une encoche de montage à la fois sur la bague intérieure et sur la bague extérieure, ce qui augmente le temps d'usinage de telles pièces.

La publication US 887356 décrit également une unité de roulement comprenant une unique rangée de corps roulants reçus dans des alvéoles d'une cage disposée entre les bagues intérieure et extérieure. Une des bagues (en l'occurrence la bague intérieure) comporte une encoche traversant le collet de la bague intérieure et qui assure un passage vers l'espace intérieur défini par la bague intérieur et la bague extérieur. Cette encoche permet de faciliter le montage des corps roulants dans l'espace intérieur.

La présence d'une encoche uniquement sur une des bagues permet de réduire les temps d'usinage des pièces de l'unité de roulement. Toutefois, une telle réalisation permet le montage d'une unité de roulement comprenant seulement une rangée de corps roulants.

US 2946633 décrit le montage de corps roulants dans un roulement sphérique à double rangée de corps roulants sans encoche de montage.

L'unité de roulement selon l'invention comporte une première bague, définissant un premier et un deuxième chemins de roulement continus, la première bague comportant un premier axe central. La première bague comprend en outre au moins une encoche de montage. L'unité de roulement comprend également une deuxième bague définissant un troisième et un quatrième chemins de roulement continus, ladite deuxième bague comportant un deuxième axe central. Les première et deuxième bagues sont espacées radialement par un espace intérieur délimité d'une part par les premier et deuxième chemins de roulement et d'autre part par les troisième et quatrième chemins de roulement. Une première rangée de corps roulants et une deuxième rangée de corps roulants sont agencées dans l'espace intérieur, la première rangée de corps roulants étant agencée entre les premier et troisième chemins de roulement et la deuxième rangée de corps roulants étant agencée entre les deuxième et quatrième chemins de roulement. Les première et deuxième rangées de corps roulants couplent en rotation la première bague et la deuxième bague. L'unité de roulement comporte en outre une cage comprenant une couronne annulaire, une première rangée d'alvéoles et une deuxième rangée d'alvéoles de réception des corps roulants, la première rangée d'alvéoles étant agencée d'un côté de la couronne annulaire pour recevoir les corps roulants de la première rangée de corps roulants, la deuxième rangée d'alvéoles étant agencée opposée à la première rangée d'alvéoles par rapport à la couronne annulaire pour recevoir les corps roulants de la deuxième rangée de corps roulants. La cage est agencée entre la première et la deuxième bague.

Ce type d'unités de roulement existe et peut donner satisfaction dans certaines conditions. Toutefois, lors de la mise en œuvre de telles unités de roulement dans des environnements soumis à des problèmes de pollution sévère, il s'est avéré que l'encoche de montage pouvait engendrer des problèmes d'étanchéité de l'unité de roulement. Notamment dans le cas d'unités de roulement comportant un joint d'étanchéité ou destinées à recevoir un joint d'étanchéité, la position de l'encoche de montage qui traverse le collet de la bague peut entrainer une rupture de l'étanchéité de l'unité de roulement, impliquant une diminution des performances de l'unité de roulement, de sa durée de vie et une augmentation des opérations de maintenance.

Un exemple d'un tel type d'unité de roulement est décrit dans la publication JP H09 177771. Celle-ci décrit une unité de roulement avec une bague intérieure et une bague extérieure définissant chacune deux chemins de roulement dans lesquelles sont respectivement agencées une première et une deuxième rangées de corps roulants. L'unité de roulement comprend en outre une cage avec deux rangées opposées d'alvéoles dans lesquelles sont respectivement reçus les corps roulants de la première et de la deuxième rangées de corps roulants. La bague extérieure comprend une surface interne parallèle au premier axe central et formant une surface de révolution autour dudit axe central. La surface interne de la bague extérieure s'étend entre deux collets (ou bord) permettant de maintenir radialement les corps roulants. Au moins un des deux collets de la bague extérieure comprend une surface de portée de joint, adaptée pour recevoir un joint d'étanchéité, une surface de rétention radiale adjacente à la surface de portée de joint, adaptée pour limiter un mouvement axial des corps roulants et une rainure inclinée pratiqué sur la surface de portée de joint et la surface de rétention axiale.

Pour résoudre ce problème d'étanchéité, une des solutions développées a été de supprimer cette encoche de montage. Toutefois, lors du montage de ce type d'unités de roulement, dépourvues d'encoche de montage, l'effort pour monter les corps roulants dans l'espace intérieur est très élevé, ce qui implique de nombreuses contraintes de fabrication. Il y a également un risque d'engendrer lors du montage des corps roulants des défauts sur les chemins de roulement, ce qui peut diminuer la performance de l'unité de roulement. En outre, il existe un risque de dégradation des corps roulants.

Il existe par conséquent le besoin de réaliser une unité de roulement qui permette un montage des corps roulants sans dégrader celle-ci, et sans pour autant entrainer une baisse de l'étanchéité de celle-ci.

A cette fin, le roulement selon l'invention, par ailleurs conforme à la définition donnée ci-dessus, se caractérise par le fait que la première bague comporte en outre :
- une surface de portée de joint, continue, formant une surface de révolution autour du premier axe central, et adaptée pour recevoir un joint d'étanchéité,
- une surface de dégagement, continue, formant une surface de révolution autour du premier axe central, adjacente à la surface de portée de joint,
- une surface de rétention axiale adaptée pour limiter un mouvement axial des corps roulants selon le premier axe central, et
- une surface de montage, de forme générale à symétrie de révolution autour du premier axe central, s'étendant entre la surface de dégagement et la surface de rétention axiale, et adjacente à la surface de dégagement et à la surface de rétention axiale, la surface de montage comprenant l'encoche de montage pour le montage des corps roulants dans l'espace intérieur.

Grâce à cette réalisation, il est possible de former une unité de roulement dont les corps roulants puissent être montés sans risques de dégradation et avec des efforts de montage peu élevés tout en garantissant une étanchéité de l'unité de roulement si nécessaire, grâce à la présence de la surface de portée de joint, continue et formant une surface de révolution. Les surfaces de portée de joint, de dégagement, de rétention axiale et de montage forment un collet de la première bague, et l'encoche de montage est prévue uniquement sur une portion du collet (la surface de montage) qui n'est pas destinée à être en contact avec un joint d'étanchéité, et qui n'est pas directement sur une surface « utile » de la première bague. En d'autres termes, la surface avant de l'unité de roulement est continue et dépourvue de tout relief ou aspérité. Ainsi, la présence de l'encoche de montage ne réduit pas les performances de l'unité de roulement. En outre, une telle unité de roulement est facile à mettre en œuvre, l'encoche de montage ne demandant qu'un usinage supplémentaire de la première bague, et non des deux bagues du roulement. Enfin, la position de l'encoche de montage permet d'adapter ladite encoche aux dimensions de corps roulants.

Selon une réalisation, la surface de dégagement s'étend parallèlement au premier axe central. Par exemple, la surface de dégagement est annulaire autour du premier axe central.

Selon une réalisation, la surface de dégagement s'étend parallèlement au premier axe central et la surface de portée de joint est tronconique et inclinée par rapport à la surface de dégagement et/ou par rapport au premier axe central d'un angle compris entre 10° et 20°, et de préférence d'un angle de l'ordre de 12° à 16°.

Selon une réalisation, la surface de dégagement s'étend parallèlement au premier axe central et la surface de portée de joint est partiellement sphérique.

Selon une réalisation, les corps roulants sont des rouleaux comprenant un rayon de rouleau ou des tonnelets comportant un rayon de courbure axial et un rayon de courbure circonférentiel [« Axial » et « circonférentiel » sont utilisés ici en référence au tonnelet lui-même, indépendamment de l'orientation du tonnelet dans le roulement].

Selon une réalisation, l'encoche de montage comporte une forme courbée en lunule. Par exemple, l'encoche de montage est partiellement cylindrique de révolution (ou encore semi-cylindrique de révolution). La forme de l'encoche est adaptée au passage de rouleaux en forme de tonnelets. En outre, la forme en lunule permet de réaliser une encoche de montage discrète.

Selon une réalisation, l'encoche de montage est inclinée par rapport à la surface de montage.

Selon une réalisation, l'encoche de montage débouche en partie dans la surface de rétention axiale.

Selon une réalisation, la première bague est une bague intérieure.

Selon une réalisation, la deuxième bague est une bague extérieure.

Selon une réalisation, la surface de montage comporte une unique encoche de montage ou deux encoches de montage par rangée d'alvéoles.

Selon une réalisation, la surface de portée de joint est adaptée pour qu'y porte frottant un joint d'étanchéité.

Selon une réalisation, la surface de portée de joint forme une première surface de portée de joint, la surface de dégagement forme une première surface de dégagement, la surface de rétention axiale forme une première surface de rétention axiale et la surface de montage forme une première surface de montage, et l'unité de roulement comprend en outre :
- une deuxième surface de portée de joint, continue, formant une surface de révolution autour du premier axe central, et adaptée pour recevoir un deuxième joint d'étanchéité,
- une deuxième surface de dégagement, continue, formant une surface de révolution autour du premier axe central, adjacente à la deuxième surface de portée de joint,
- une deuxième surface de rétention axiale adaptée pour limiter un mouvement axial des corps roulants selon le premier axe central, et
- une deuxième surface de montage, de forme générale annulaire ou tronconique autour du premier axe central, s'étendant entre la deuxième surface de dégagement et la deuxième surface de rétention axiale, et adjacente à la deuxième surface de dégagement, la deuxième surface de montage comprenant une deuxième encoche de montage pour le montage des corps roulants dans l'espace intérieur. Les deuxièmes surfaces de portée de joint, de dégagement, de rétention axiale et de montage forment un deuxième collet de la première bague, les premier et deuxième collets étant situés de part et d'autre des premier et deuxième chemins de roulement. Par exemple, le premier collet est situé adjacent au premier chemin de roulement, tandis que le deuxième collet est situé adjacent au deuxième chemin de roulement. La présence de la deuxième encoche de montage permet notamment le remplissage des corps roulants de la deuxième rangée de corps roulants.

Selon une réalisation complémentaire, la première et la deuxième encoches de montage sont alignées l'une par rapport à l'autre par rapport au premier axe central. En d'autres termes, la première encoche de montage est agencée au droit de la deuxième encoche de montage.

Selon une réalisation, l'unité de roulement comprend un premier joint d'étanchéité reçu par la première surface de portée de joint et un deuxième joint d'étanchéité reçu par la deuxième surface de portée de joint. Les premier et deuxième joints d'étanchéité assurent l'étanchéité de l'unité de roulement.

Selon une réalisation, les premier et deuxième chemins de roulement sont inclinés par rapport au premier axe central.

Selon une réalisation, les troisième et quatrième chemins de roulements forment un unique chemin de roulement de forme sphérique. Le premier chemin de roulement et le deuxième chemin de roulement présentent une forme complémentaire de celle des corps roulants. L'unité de roulement est une unité de roulement à rotule à deux rangées de corps roulants avec alésage cylindrique ou conique.

La présente invention concerne également un procédé pour fabriquer une unité de roulement telle que précédemment décrite. Le procédé comprend notamment les étapes :
a) prévoir une première bague définissant un premier et un deuxième chemins de roulement continus et comportant un premier axe central et comprenant au moins une encoche de montage,
b) prévoir une deuxième bague définissant un troisième et un quatrième chemins de roulement continus, ladite deuxième bague comportant un deuxième axe central,
c) prévoir une cage comprenant une couronne annulaire, une première rangée d'alvéoles et une deuxième rangée d'alvéoles, la première rangée d'alvéoles étant agencée d'un côté de la couronne annulaire, la deuxième rangée d'alvéoles étant agencée opposée à la première rangée d'alvéoles par rapport à la couronne annulaire,
d) prévoir une pluralité de corps roulants,
e) positionner la cage par rapport à la première bague de sorte que la première rangée d'alvéoles soit en regard du premier chemin de roulement et que la deuxième rangée d'alvéoles soit en regard du deuxième chemin de roulement,
f) positionner quelques corps roulants dans quelques alvéoles, préférentiellement de façon équirépartie, de manière à maintenir provisoirement la cage sur la première bague,
g) insérer les corps roulant dans les alvéoles jusqu'à obtenir quelques alvéoles vides dans chaque rangée d'alvéoles,
h) insérer l'ensemble constitué de la première bague, de la cage et des corps roulants perpendiculairement à la deuxième bague de sorte que le premier axe central soit perpendiculaire au deuxième axe central,
i) déplacer en rotation la cage par rapport à la première bague de sorte à faire correspondre une encoche de montage avec une alvéole vide de la première rangée d'alvéoles et/ou de la deuxième rangée d'alvéoles,
j) insérer un corps roulant par ladite encoche de montage dans l'alvéole de sorte à emplir l'alvéole,
k) répéter les étapes i) et j) pour insérer les derniers corps roulants par une encoche de montage dans les alvéoles vides,
l) faire tourner l'ensemble constitué de la première bague, de la cage et des corps roulants par rapport à la deuxième bague de sorte que le premier axe central soit parallèle au deuxième axe central.

Selon une réalisation, le procédé comprend en outre une étape de fixation d'un ou plusieurs joints d'étanchéité sur la deuxième bague et/ou première bague.

Certains modes de réalisation seront mis en œuvre notamment dans les cas où les efforts supportés par le roulement risquent de causer un désalignement des axes des bagues (suite par exemple à un fléchissement de l'arbre, ou à un déversement d'une des bagues). Ce risque survient notamment pour les roulements dits sphériques (caractérisés par la forme de la piste de roulement de la bague extérieure). Un des avantages de certains modes de réalisation est de permettre à la fois le maintien d'une bonne étanchéité tout en permettant un montage de qualité (où l'insertion des corps roulants dans le roulement ne détériore pas la piste de roulement).

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en perspective d'une unité de roulement selon une réalisation de l'invention comportant une première et une deuxième bagues, des corps roulants s'étendant entre les première et deuxième bagues et une encoche de montage prévue sur la première bague ;
- La figure 2 représente une vue en coupe transversale de l'unité de roulement de la figure 1 ;
- La figure 3 est une vue en perspective d'une cage de l'unité de roulement représentée sur la figure 1 ;
- La figure 4 est une vue en perspective de la première bague (en l'occurrence la bague intérieure) de l'unité de roulement de la figure 1, avec l'encoche de montage ;
- La figure 5 est une vue schématique du détail V de la figure 2 représentant un collet (ou bord) de la première bague ;
- La figure 5a est une vue schématique similaire à la figure 5, dans une région sans lunule ;
- La figure 6 est une vue en perspective d'un ensemble constitué de la première bague comprenant l'encoche de montage, de la cage et des corps roulants ;
- La figure 7 est une vue en perspective d'une unité de roulement conforme à celle de la figure 1 et comportant en outre un joint d'étanchéité ;
- La figure 8 est une figure en coupe représentative d'une variante de montage du joint d'étanchéité.

Ci-après un exposé détaillé de plusieurs modes de réalisation de l'invention assorti d'exemples et de référence aux dessins.

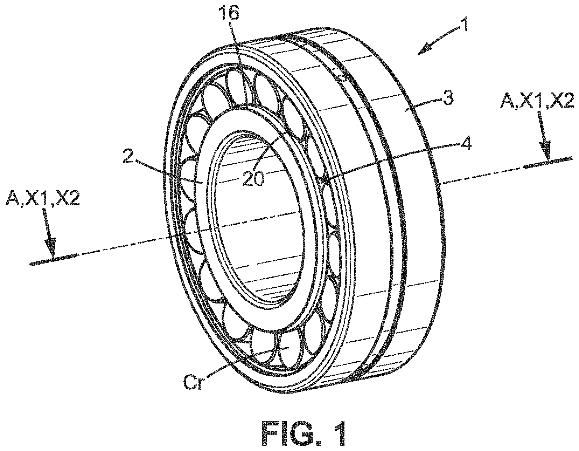

La figure 1 illustre une unité de roulement 1. L'unité de roulement 1 est composée d'une première bague 2 et d'une deuxième bague 3. En l'occurrence, tel que représenté sur les figures, la première bague 2 est une bague intérieure et la deuxième bague 3 est une bague extérieure. Toutefois, dans des variantes de réalisation, il serait possible que la première bague 2 soit une bague extérieure tandis que la deuxième bague 3 est une bague intérieure.

Par convention, il convient de mentionner, d'une part, que la direction axiale fera référence dans la suite du texte à toute direction coïncidant avec l'axe géométrique de révolution A-A de l'unité de roulement 1 ou de la première bague 2 et, d'autre part, que la direction radiale fera référence à toute direction issue de l'axe géométrique de révolution A-A et appartenant à un plan perpendiculaire à cet axe géométrique de révolution A-A. Ces définitions sont appliquées par défaut sauf s'il est explicite, ou implicite que, ponctuellement, elles ne trouvent pas à s'appliquer.

La première et la deuxième bagues 2, 3 ont une forme annulaire, et comportent chacune une face intérieure qui définit son diamètre intérieur et une face extérieure qui définit son diamètre extérieur. Les première et deuxième bagues 2, 3 comportent chacune une première et une deuxième face radiale Fr s'étendant radialement. Les première et deuxième faces radiales, relient les faces intérieure et extérieure. Les premières faces radiales des bagues peuvent être coplanaires ou non coplanaires. De façon similaire, les deuxièmes faces radiales Fr des bagues peuvent être coplanaires ou non coplanaires. Les faces radiales Fr de bagues sont visibles depuis l'extérieur de l'unité de roulement 1.

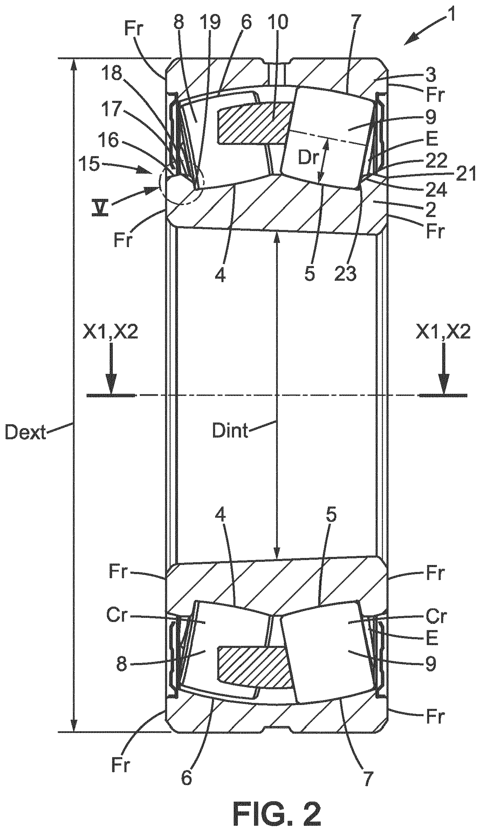

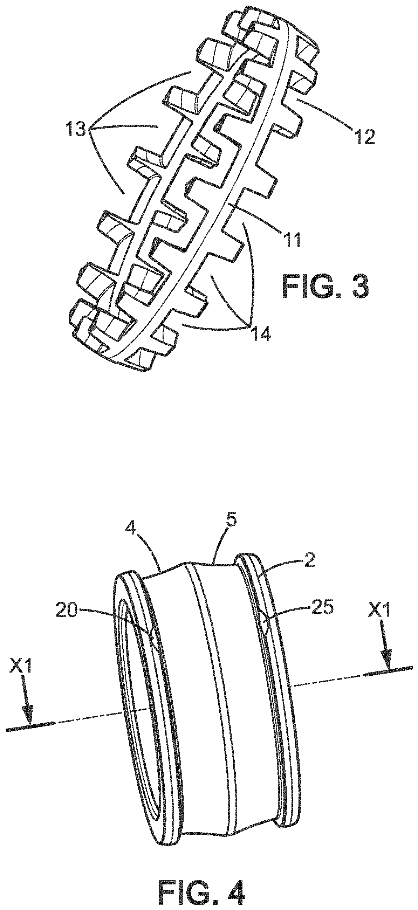

La première bague 2 comporte, comme mieux visible sur la figure 2 ou sur la figure 4, un premier chemin de roulement 4 et un deuxième chemin de roulement 5. La première bague 2 comporte un premier axe central X1. En l'espèce, la première bague 2 peut être formée d'une pièce monobloc en acier. Comme illustré sur la figure 2, les premier et deuxième chemins de roulement 4, 5 sont inclinés par rapport au premier axe central X1. Toutefois, dans des variantes de réalisation, les premier et deuxième chemins de roulement 4, 5 peuvent ne pas être inclinés par rapport au premier axe central X1.

La deuxième bague 3 comporte un troisième chemin de roulement 6 et un quatrième chemin de roulement 7. La deuxième bague 3 comporte un deuxième axe central X2. En l'espèce, la deuxième bague 3 peut également être formée d'une pièce monobloc en acier.

A l'état monté de l'unité de roulement 1, la première et la deuxième bagues 2, 3 sont espacées radialement par un espace intérieur E. L'espace intérieur E est délimité par les premier, deuxième, troisième et quatrième chemins de roulement 4, 5, 6, 7.

Dans l'espace intérieur E sont agencées une première rangée de corps roulants 8 et une deuxième rangée de corps roulants 9. En l'occurrence, la première rangée de corps roulants 8 est agencée entre les premier et troisième chemins de roulement 4, 6. La deuxième rangée de corps roulants 9 est agencée entre les deuxième et quatrième chemins de roulement 5, 7. Les corps roulants des première et deuxième rangées de corps roulants 8, 9 permettent de coupler en rotation les première bague 2 et deuxième bague 3.

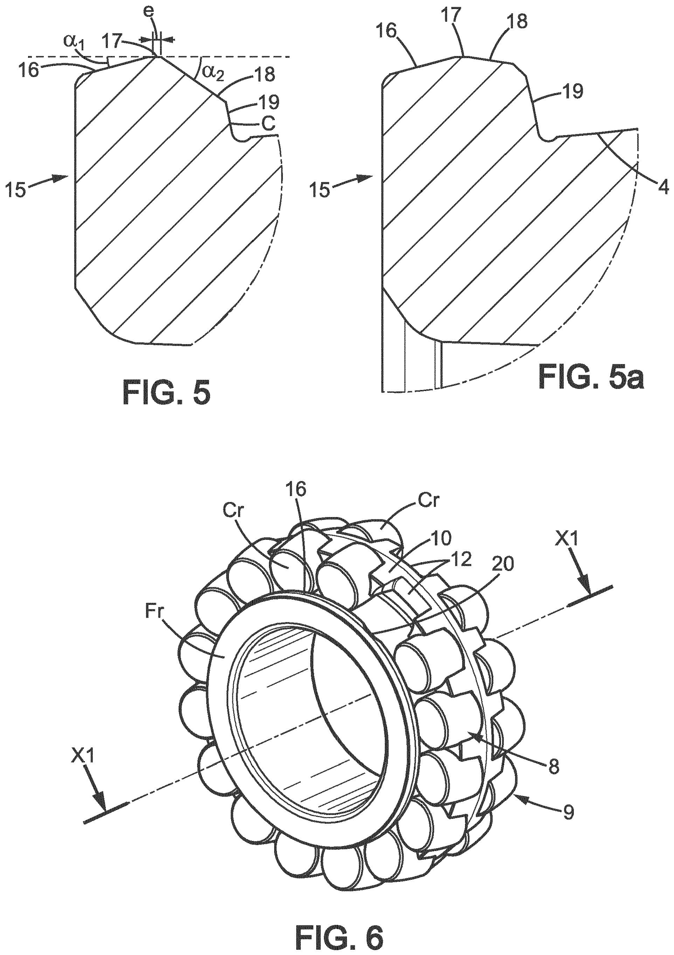

En l'occurrence, tel qu'illustré notamment sur les figures 2 et 6, les corps roulants Cr des première et deuxième rangées de corps roulants 8, 9 sont identiques. Toutefois, dans des variantes de réalisation, les corps roulants de ces deux rangées pourraient être différents.

Par exemple les corps roulants Cr sont des rouleaux coniques ou cylindriques ou tonnelets. Toutefois, dans des variantes de réalisation d'autres types de corps roulants peuvent être utilisés comme des billes par exemple. Comme représenté notamment sur la figure 6, les corps roulants sont des rouleaux tonnelets comportant un rayon de courbure circonférentiel maximal de rouleau Dr. Les rouleaux sont ainsi conformés en tonneaux d'axe, avec deux faces transversales d'extrémité (par exemple planes) et une surface de roulement convexe engendrée par une génératrice constituée par un arc de cercle ou d'ellipse. En variante, on peut prévoir des rouleaux cylindriques de rayon de rouleau Dr. Notamment, le corps roulant est plus long que large.

En l'espèce, les troisième et quatrième chemins de roulements 6, 7 forment un unique chemin de roulement de forme sphérique. Le premier chemin de roulement 4 et le deuxième chemin de roulement 5 présentent une forme complémentaire de celle des corps roulants. Les premier et deuxième axes centraux X1, X2 peuvent être parallèles ou former un léger angle entre eux. En l'occurrence, l'unité de roulement 1 illustrée sur les figures est une unité de roulement 1 à rotule sur deux rangées de rouleaux, et avec alésage conique. En variante, l'alésage pourrait être cylindrique.

Par exemple, le diamètre extérieur Dext de l'unité de roulement 1 (correspondant au diamètre extérieur de la deuxième bague 3 qui, en l'occurrence forme la bague extérieure) peut être compris entre 100 millimètres (mm) et 1200 mm. Le diamètre intérieur Dint de l'unité de roulement 1 (correspondant au diamètre intérieur de la première bague 2 qui, en l'occurrence forme la bague intérieure) peut être compris entre 45 mm et 800 millimètres (mm).

L'unité de roulement 1 peut avoir une masse de l'ordre de 1 à 2000 kilogrammes lorsque l'ensemble des corps roulants sont montés.

Ce type d'unités de roulement 1 peut supporter des défauts d'alignement importants. Sa conception permet également de supporter de charges radiales très élevées, et des charges axiales plus faibles. Toutefois, l'invention n'est pas limitée à des unités de roulement à rotule et peut trouver des applications dans d'autres types d'unité de roulement 1.

L'unité de roulement 1 comporte en outre une cage 10. La cage 10 est par exemple une cage 10 massive. En l'espèce, comme mieux représenté sur la figure 3, la cage 10 est une cage 10 dite « peigne ». La cage 10 comporte une couronne annulaire 11 (encore appelée nervure annulaire). De part et d'autre de la couronne annulaire 11 de la cage 10 sont agencées des alvéoles 12 de réception des corps roulants.

Plus particulièrement, la cage 10 comporte une première rangée d'alvéoles 13 destinée à recevoir les corps roulants de la première rangée de corps roulants 8 et une deuxième rangée d'alvéoles 14 destinée à recevoir les corps roulants de la deuxième rangée de corps roulants 9. Les première et deuxième rangées d'alvéoles 13, 14 sont disposées de part et d'autre de la couronne annulaire 11. En d'autres termes, la première rangée d'alvéoles 13 est disposée d'un côté de la couronne annulaire 11 et la deuxième rangée d'alvéoles 14 est disposé du côté opposé de la couronne annulaire 11. En l'espèce, une série de ponts s'étendent axialement depuis la couronne annulaire 11. Deux ponts voisins délimitent ensemble une alvéole de réception d'un corps roulant, le fond de l'alvéole de réception étant formé par la couronne annulaire 11. Les ponts s'étendent d'une extrémité reliée à la couronne annulaire 11 à une extrémité opposée libre. Les extrémités libres ne sont pas reliées les unes aux autres.

Les alvéoles 12 des première et deuxième rangées d'alvéoles 13, 14 sont également réparties sur le pourtour de la couronne annulaire 11. Par exemple, tel que représenté, chaque rangée d'alvéoles 12 comporte seize alvéoles 12. Toutefois, dans des variantes de réalisation le nombre d'alvéoles peut varier. En particulier, il est possible de prévoir plus ou moins de seize alvéoles 12, par exemple entre 8 et 50 alvéoles par rangée. En outre, il serait également possible que le nombre d'alvéoles 12 de la première rangée d'alvéoles 13 soit différent du nombre d'alvéoles 12 de la deuxième rangée d'alvéoles 14.

Lorsque les corps roulants des première et deuxième rangées de corps roulants 8, 9 sont identiques, les alvéoles 12 des première et deuxième rangées d'alvéoles 13, 14 sont également identiques. Toutefois, dans une variante de réalisation, les alvéoles 12 des première et deuxième rangées d'alvéoles pourraient être différentes.

Tel que représenté, les alvéoles 12 de la première rangée d'alvéoles 13 ne sont pas en regard des alvéoles 12 de la deuxième rangée d'alvéoles 14. En effet, comme visible sur la figure 3, les alvéoles 12 de la première rangée d'alvéoles 13 sont décalées angulairement par rapport aux alvéoles 12 de la deuxième rangée d'alvéoles 14. Par exemple, le milieu d'une alvéole 12 de la première rangée d'alvéoles 13 peut être en regard d'un pont d'une alvéole 12 de la deuxième rangée d'alvéoles 14.

La taille des alvéoles 12 est telle qu'un corps roulant peut être inséré dans une alvéole. En particulier, comme mieux visible sur la figure 6, lorsqu'un rouleau est inséré dans une alvéole 12, une des deux faces planes transversales d'extrémité du rouleau coopère avec le fond de l'alvéole 12.

La cage 10 est par exemple réalisée en laiton. Toutefois d'autres matériaux pour réaliser la cage 10 peuvent être envisagés. Par exemple, la cage 10 pourrait être réalisée dans tout autre alliage de cuivre, de zinc ou d'acier.

Dans l'état monté de l'unité de roulement 1, la cage 10 s'étend dans l'espace intérieur E entre les première et deuxième bagues 2, 3. La cage 10 permet ainsi de séparer les corps roulants à l'intérieur de l'unité de roulement 1 et de maintenir leur équidistance dans le but notamment de réduire le frottement et, donc, l'échauffement généré lors de l'utilisation de l'unité de roulement 1. La cage 10 s'avère également utile pour guider les corps roulants Cr.

La cage 10 peut être retenue sur la première bague 2 pendant le montage de l'unité de roulement. La cage 10, qui peut être massive, est en l'espèce centrée sur les rouleaux. En variante, on pourrait prévoir que la cage 10 soit centrée avec un jeu réduit sur la première bague 2, pour limiter le débattement radial entre la cage 10 et la première bague 2.

La première bague 2 comporte en outre, à au moins une des ses extrémités axiales, un rebord tourné radialement vers la deuxième bague 3. Le rebord, agencé du coté du premier chemin de roulement 4 forme un premier collet 15.

La première bague 2 comporte une surface de portée de joint 16, une surface de dégagement 17, une surface de montage 18 et une surface de rétention axiale 19. Plus particulièrement, le premier collet 15 comporte une surface de portée de joint 16, une surface de dégagement 17, une surface de montage 18 et une surface de rétention 19. Ces surfaces sont mieux illustrées sur la figure 5 qui est une vue de détail du collet vu sur la figure 2.

La surface de portée de joint 16 est continue, formant une surface de révolution autour du premier axe central X1. Par exemple, la surface de portée de joint 16 est annulaire, tronconique ou sphérique. Toutefois, la surface de portée de joint 16 peut présenter d'autres formes. La surface de portée de joint 16 est adaptée, comme son nom l'indique, pour qu'y frotte un joint d'étanchéité. La surface de portée de joint 16 est à symétrie de révolution. Elle est continue entièrement et dépourvue de tout relief qui pourrait créer une rupture d'étanchéité lorsqu'elle rejoint un joint d'étanchéité.

Par exemple, la surface de portée de joint 16 est tronconique. En section, elle s'étend en formant un angle α1 entre 10° et 20° avec le premier axe central X1. En l'espèce, la surface de portée de joint 16 s'étend selon un plan qui forme un angle α1 de l'ordre de 12° à 16° avec le premier axe central X1. La surface de portée de joint 16 est adjacente à la surface de dégagement 17.

La surface de dégagement 17 est continue, formant une surface de révolution autour du premier axe central X1. Par exemple, la surface de portée de dégagement est annulaire ou tronconique. La surface de dégagement 17 est par exemple parallèle au premier axe central X1. La surface de dégagement 17 peut s'étendre le long du premier axe central X1 sur une longueur e de l'ordre de quelques millimètres ou même moins. En l'espèce, la surface de dégagement 17 est continue entièrement et dépourvue de tout relief. La surface de dégagement 17 s'étend entre la surface de portée de joint 16 et la surface de montage 18, et est adjacente à la surface de montage 18.

La surface de montage 18 est en l'espèce de forme générale tronconique ou annulaire autour du premier axe central X1. La surface de montage 18 est par exemple plane et s'étend dans la continuité de la surface de dégagement 17

La surface de rétention axiale 19 s'étend depuis la surface de montage 18 vers le premier chemin de roulement 4. Elle est orientée de manière à former une butée de rétention axiale du corps roulant. Une telle butée est utile lors du montage de l'unité de roulement, mais n'a pas vocation à être utile lors du fonctionnement du roulement, sauf éventuellement en cas de chargement extrême.

La surface de montage 18 comporte une encoche de montage 20. Dans l'exemple, une encoche est un creux, correspondant à une enlevée de matière, par rapport à la géométrie générale de la surface dans laquelle elle est formée. L'encoche de montage 20 est prévue sur la surface de montage 18 et ne s'étend pas au-delà vers l'extérieur de l'unité de roulement, et elle ne s'étend notamment pas vers la surface de dégagement 17 ou la surface de portée de joint 16. L'encoche de montage 20 est ainsi non débouchante sur la face avant (ou la face radiale Fr) de la première bague 2. L'encoche de montage 20 débouche dans la surface de rétention axiale 19, limitant ainsi localement l'étendue de la surface de rétention axiale 19.

En section, la direction dans laquelle s'étend l'encoche de montage 20 est par exemple inclinée par rapport au premier axe central X1. Au centre, l'encoche de montage 20 est par exemple inclinée d'un angle α2 non nul pour permettre de pousser le corps roulant vers l'espace intérieur E. L'angle α2 entre l'encoche de montage 18 et le premier axe central X1 peut être inférieur à une certaine valeur seuil. Cette valeur seuil peut être calculée de sorte qu'un épaulement C subsiste, au niveau de la surface de rétention axiale 19, entre la surface de montage 18 et le premier chemin de roulement 4. Cet épaulement C permet notamment de maintenir le corps roulant dans la direction axiale.

Comme illustré sur la figure 4, l'encoche de montage 20 est par exemple de forme courbée en lunule. Cette forme courbe est préférentiellement symétrique par rapport à un plan médian d'encoche. Par exemple, l'encoche de montage 20 est inclinée par rapport à la surface de montage 18.

L'encoche de montage 20 s'étend sur une portion de la circonférence de la première bague 2. Par exemple l'encoche de montage 20 s'étend sur une portion angulaire de la circonférence de la première bague 2 qui est inférieure à 45°, notamment inférieure à 20°, selon les dimensions caractéristiques des corps roulants. En particulier, l'encoche de montage 20 peut être de forme sensiblement partiellement cylindrique avec un diamètre d'encoche. En l'espèce, les dimensions de l'encoche de montage 20 sont dépendantes des dimensions des corps roulants Cr de l'unité de roulement 1.

En l'occurrence, dans l'unité telle qu'illustrée sur les figures, la première bague 2 comporte à chacune des ses extrémités axiales un rebord tourné radialement vers la deuxième bague 3. Le rebord, agencé du coté du deuxième chemin de roulement 5 forme un deuxième collet. Dans ce cas, la surface de portée de joint 16 décrite ci-dessus forme une première surface de portée de joint 16, la surface de dégagement 17 décrite ci-dessus forme une première surface de dégagement 17, la surface de rétention axiale 19 décrite ci-dessus forme une première surface de rétention axiale 19 et la surface de montage 18 décrite ci-dessus forme une première surface de montage 18.

La première bague 2 comporte ainsi une deuxième surface de portée de joint 21, une deuxième surface de dégagement 22, une deuxième surface de rétention axiale 23 et une deuxième surface de montage 24. La première bague 2 peut être ainsi sensiblement symétrique par rapport à un plan médian de bague passant par le milieu de la bague et ayant pour normale le premier axe central X1.

Une deuxième encoche de montage 25 peut être prévue sur la deuxième surface de montage 24. La deuxième encoche de montage 25 est destinée à assurer le montage des corps roulants Cr de la deuxième rangée de corps roulants 9, tandis que la première encoche de montage 20 est destinée à permettre le montage des corps roulants de la première rangée de corps roulants 8.

La deuxième encoche de montage 25 peut être de forme sensiblement semblable à celle de la première encoche de montage 20, notamment si les corps roulants de la deuxième rangée de corps roulant sont identiques à ceux de la première rangée de corps roulants 8. Toutefois, dans des variantes de réalisation, les encoches de montage 20, 25 peuvent être de forme et/ou de dimensions différentes, selon la forme et/ou les dimensions des corps roulants des première et deuxième rangées de corps roulants.

Par exemple, la première et la deuxième encoche de montage 20, 25 sont alignées l'une par rapport à l'autre par rapport au premier axe central X1. En d'autres termes, la première et la deuxième encoche de montage 20, 25 sont en regard l'une de l'autre.

Un premier joint d'étanchéité 26 peut venir frotter sur la première surface de portée de joint 16. En outre, un deuxième joint d'étanchéité 26 peut venir frotter sur la deuxième surface de portée de joint 21. Sur la figure 2, à fins de clarté, seule l'armature des joints d'étanchéité a été représentée. Les première et deuxième surfaces de portée de joint 16, 21 étant continue et à symétrie de révolution, le joint d'étanchéité 26 peut être monté sans risque de perte d'étanchéité. L'encoche 20 ne déborde pas sur la surface de portée 16 où va frotter le joint.

Le joint d'étanchéité 26 peut être fixé sur la deuxième bague 3 (correspondant à la bague extérieure). En particulier le joint d'étanchéité 26 fixé sur la deuxième bague 3 qui forme la bague extérieure permet de limiter les fuites de graisse. En effet, lorsque l'unité de roulement 1 est en fonctionnement, la graisse (ou tout autre lubrifiant utilisé) est projetée de manière centrifuge.

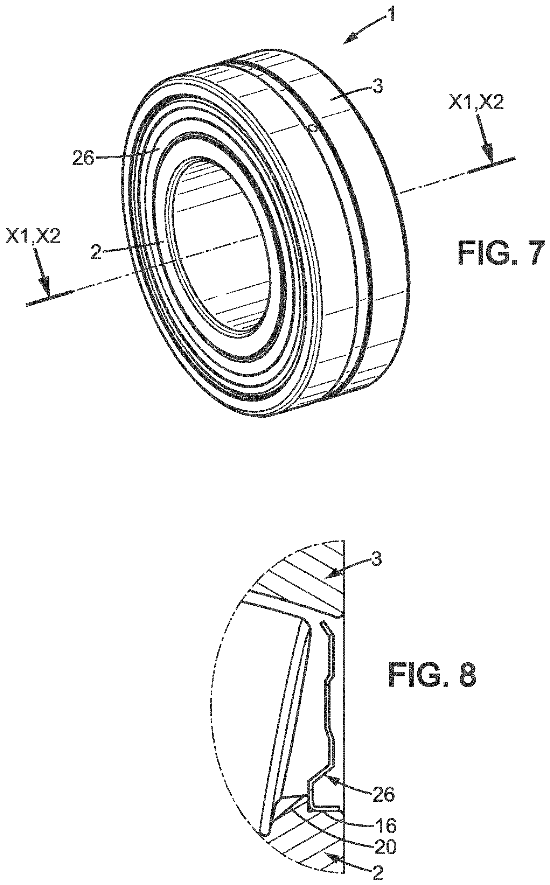

En variante, tel que représenté sur la figure 8, le joint d'étanchéité 26 peut être fixé sur la première bague 2, et frotter sur la deuxième bague 3.

Le montage d'une unité de roulement 1 telle que décrite peut avoir lieu en plusieurs étapes.

Dans une première étape, on positionne la cage 10 par rapport à la première bague 2 de sorte que la première rangée d'alvéoles 13 soit en regard du premier chemin de roulement 4, et que la deuxième rangée d'alvéoles 14 soit en regard du deuxième chemin de roulement 5.

Dans une deuxième étape, on positionne quelques corps roulants dans quelques alvéoles 12. Par exemple, on positionne trois corps roulants dans trois alvéoles de chaque rangée d'alvéoles 13, 14, de manière à maintenir provisoirement la cage sur la première bague. Les trois corps roulants Cr peuvent être positionnés à équidistance les uns des autres sur la circonférence de l'unité de roulement 1.

Dans une troisième étape, on insère les corps roulants dans les alvéoles jusqu'à obtenir quelques alvéoles vides dans chaque rangée d'alvéole.
Notamment, dans le cas d'une cage 10 comprenant seize alvéoles 12 pour chaque rangée d'alvéoles 13, 14, on emplit uniquement treize alvéoles pour chaque rangée d'alvéoles 13, 14.

Dans une quatrième étape, on vient insérer l'ensemble obtenu composé de la première bague 2, de la cage 10, et des corps roulants qu'elle accueille (présentant, localement, un diamètre réduit par rapport au diamètre final de l'ensemble comportant tous les corps roulants) dans la deuxième bague 3. Plus précisément, on insère l'ensemble obtenu perpendiculairement à la deuxième bague 3, en profitant du jeu encore autorisé par l'absence de certains corps roulants dans la cage. En d'autres termes, les premier et deuxième axes centraux X1, X2 sont sensiblement perpendiculaires.

On vient ensuite disposer les quelques derniers corps roulants Cr dans l'unité de roulement 1 en utilisant l'encoche de montage 20, 25.

En l'occurrence, pour chaque rangée d'alvéoles 13, 14, on positionne dans un premier temps une alvéole 12 libre (c'est-à-dire dépourvue de corps roulant) en face de l'encoche de montage 20. Pour positionner une alvéole 12 libre en face de l'encoche de montage 20, 25, il suffit de déplacer en rotation l'ensemble composé de la cage 10 et des corps roulants déjà montés dans la cage 10 par rapport à la première bague 2.

Lorsqu'une alvéole 12 libre est en face de l'encoche de montage 20, il est possible d'insérer un corps roulant dans l'alvéole par l'intermédiaire de l'encoche de montage 20. L'utilisation de l'encoche de montage 20, 25 permet d'éviter les rayures ou déformations sur le chemin de roulement 4, 5, 6, 7 correspondant et ainsi de garantir la durée de vie de l'unité de roulement 1 et le bon fonctionnement de l'unité de roulement 1.

On insère ainsi les derniers corps roulant Cr dans les dernières alvéoles libres en face de l'encoche par poussée sur le corps roulant.

On fait tourner l'ensemble constitué de la première bague 2, de la cage 10 et des corps roulants Cr par rapport à la deuxième bague 3 de sorte que le premier axe central X1 soit parallèle au deuxième axe central X2.

On monte ensuite le joint d'étanchéité 26 sur la deuxième bague 3. Le joint d'étanchéité 26 est en contact avec la surface de portée de joint 16 de la première bague 2.

## Revendications

1. Unité de roulement (1) à double rangée de corps roulants comportant :
- une première bague (2), la première bague (2) définissant un premier et un deuxième chemin de roulement (4, 5) continus et la première bague (2) comportant un premier axe central (X1), la première bague (2) comprenant en outre au moins une encoche de montage (20),
- une deuxième bague (3) sphérique, la deuxième bague (3) définissant un troisième et un quatrième chemins de roulement (6, 7) continus, ladite deuxième bague (3) comportant un deuxième axe central (X2), lesdites première et deuxième bagues (2,3) étant espacées radialement par un espace intérieur (E) délimité d'une part par les premier et deuxième chemins de roulement (4, 5) et d'autre part par les troisième et quatrième chemins de roulement (6, 7),
- une première rangée de corps roulants (8) et une deuxième rangée de corps roulants (9) agencées dans l'espace intérieur (E), la première rangée de corps roulants (8) étant agencée entre les premier et troisième chemins de roulement (4, 6) et la deuxième rangée de corps roulants (9) étant agencée entre les deuxième et quatrième chemins de roulement (5, 7), lesdites première et deuxième rangées de corps roulants (8, 9) couplant en rotation ladite première bague (2) et ladite deuxième bague (3),
- une cage (10) comprenant une couronne annulaire (11), une première rangée d'alvéoles (13) et une deuxième rangée d'alvéoles (14), de réception des corps roulants (Cr), la première rangée d'alvéoles (13) étant agencée d'un coté de la couronne annulaire (11) pour recevoir les corps roulants de la première rangée de corps roulants (8), la deuxième rangée d'alvéoles (14) étant agencée opposée à la première rangée d'alvéoles (13) par rapport à la couronne annulaire (11) pour recevoir les corps roulants (Cr) de la deuxième rangée de corps roulants (9), la cage (10) étant agencée entre la première et la deuxième bague (2,3),
**caractérisé en ce que** la première bague (2) comporte en outre :
- une surface de portée de joint (16), continue, formant une surface de révolution autour du premier axe central (X1), et adaptée pour recevoir un joint d'étanchéité,
- une surface de dégagement (17), continue, formant une surface de révolution autour du premier axe central (X1), adjacente à la surface de portée de joint,
- une surface de rétention axiale (19) adaptée pour limiter un mouvement axial des corps roulants selon le premier axe central (X1),
- une surface de montage (18), de forme générale à symétrie de révolution autour du premier axe central (X1), s'étendant entre la surface de dégagement (17) et la surface de rétention axiale (19), et adjacente à la surface de dégagement (17) et à la surface de rétention axiale (19), la surface de montage (18) comprenant l'encoche de montage (20) pour le montage des corps roulants dans l'espace intérieur (E), ladite encoche (20) ne débordant pas sur la surface de portée de joint (16).

2. Unité de roulement (1) selon la revendication 1, dans laquelle la surface de dégagement (17) s'étend parallèlement au premier axe central (X1).

3. Unité de roulement (1) selon la revendication 1 ou la revendication 2, dans laquelle la surface de dégagement (17) s'étend parallèlement au premier axe central (X1), et dans laquelle la surface de portée de joint (16) est tronconique et inclinée par rapport à la surface de dégagement (17) d'un angle compris entre 10° et 20°, et de préférence d'un angle de l'ordre de 12° à 16°.

4. Unité de roulement (1) selon la revendication 1 ou la revendication 2, dans laquelle la surface de dégagement (17) s'étend parallèlement au premier axe central (X1), et dans laquelle la surface de portée de joint (16) est partiellement sphérique.

5. Unité de roulement (1) selon l'une quelconque des revendications précédentes, dans laquelle les corps roulants (Cr) sont des rouleaux comprenant un rayon de rouleau (Dr) ou des tonnelets comprenant un rayon de courbure axial et un rayon de courbure circonférentiel.

6. Unité de roulement (1) selon la revendication 5, dans laquelle l'encoche de montage (20) comporte une forme courbée en lunule, et dans laquelle l'encoche de montage (20) est partiellement cylindrique de révolution.

7. Unité de roulement (1) selon l'une quelconque des revendications précédentes, dans laquelle l'encoche de montage (20) est inclinée par rapport à la surface de montage (18), et dans laquelle l'encoche de montage (20) débouche en partie dans la surface de rétention axiale (19).

8. Unité de roulement (1) selon l'une quelconque des revendications précédentes, dans laquelle la première bague (2) est une bague intérieure, et dans laquelle la deuxième bague (3) est une bague extérieure.

9. Unité de roulement (1) selon l'une quelconque des revendications précédentes, dans laquelle la surface de montage (18) comporte une unique encoche de montage (20), ou deux encoches de montage (20) par rangée d'alvéoles.

10. Unité de roulement (1) selon l'une quelconque des revendications précédentes, dans laquelle la surface de protée de joint (16) est adaptée pour qu'y porte frottant un joint d'étanchéité.

11. Unité de roulement (1) selon l'une quelconque des revendications précédentes, dans laquelle la surface de portée de joint (16) forme une première surface de portée de joint (16), la surface de dégagement forme une première surface de dégagement (17), la surface de rétention axiale forme une première surface de rétention axiale (19) et la surface de montage forme une première surface de montage (18), et comprenant en outre :
- une deuxième surface de portée de joint (21), continue, formant une surface de révolution autour du premier axe central (X1), et adaptée pour recevoir un deuxième joint d'étanchéité,
- une deuxième surface de dégagement (22), continue, formant une surface de révolution autour du premier axe central (X1), adjacente à la deuxième surface de portée de joint,
- une deuxième surface de rétention axiale (23) adaptée pour limiter un mouvement axial des corps roulants selon le premier axe central (X1), et
- une deuxième surface de montage (24), de forme générale annulaire ou tronconique autour du premier axe central (X1), s'étendant entre la deuxième surface de dégagement et la deuxième surface de rétention axiale (23), et adjacente à la deuxième surface de dégagement, la deuxième surface de montage comprenant une deuxième encoche de montage (25) pour le montage des corps roulants dans l'espace intérieur (E).

12. Unité de roulement (1) selon la revendication 11, dans laquelle la première et la deuxième encoche de montage (20, 25) sont alignées l'une par rapport à l'autre par rapport au premier axe central (X1).

13. Unité de roulement (1) selon la revendication 11 ou 12, comprenant en outre un premier joint d'étanchéité (26) reçu par la première surface de portée de joint (16) et un deuxième joint d'étanchéité (26) reçu par la deuxième surface de portée de joint (21).

14. Unité de roulement (1) selon l'une quelconque des revendications précédentes, dans laquelle les premier et deuxième chemins de roulement (4, 5) sont inclinés par rapport au premier axe central (X1).

15. Unité de roulement (1) selon l'une quelconque des revendications précédentes, dans laquelle les troisième et quatrième chemins de roulements (6, 7) forment un unique chemin de roulement de forme sphérique, et dans laquelle le premier chemin de roulement (4) et le deuxième chemin de roulement (5) présentent une forme complémentaire de celle des corps roulants.

16. Procédé pour fabriquer une unité de roulement (1) selon l'une quelconque des revendications précédentes, comprenant les étapes :
a) prévoir une première bague (2) définissant un premier et un deuxième chemin de roulement (4, 5) continus, comportant un premier axe central (X1) et comprenant au moins une encoche de montage (20),
b) prévoir une deuxième bague (3) sphérique définissant un troisième et un quatrième chemins de roulement (6, 7) continus, ladite deuxième bague (3) comportant un deuxième axe central (X2),
c) prévoir une cage (10) comprenant une couronne annulaire, une première rangée d'alvéoles et une deuxième rangée d'alvéoles, la première rangée d'alvéoles (13) étant agencée d'un coté de la couronne annulaire (11), la deuxième rangée d'alvéoles (14) étant agencée opposée à la première rangée d'alvéoles par rapport à la couronne annulaire (11),
d) prévoir une pluralité de corps roulants (Cr),
e) positionner la cage (10) par rapport à la première bague (2) de sorte que la première rangée d'alvéoles soit en regard du premier chemin de roulement (4) et que la deuxième rangée d'alvéoles soit en regard du deuxième chemin de roulement (5),
f) positionner quelques corps roulants (Cr) dans quelques alvéoles (12), de manière à maintenir provisoirement la cage sur la première bague,
g) insérer les corps roulant dans les alvéoles jusqu'à obtenir quelques alvéoles vides dans chaque rangée d'alvéoles,
h) insérer l'ensemble constitué de la première bague (2), de la cage (10) et des corps roulants (Cr) perpendiculairement à la deuxième bague (3) de sorte que le premier axe central (X1) soit perpendiculaire au deuxième axe central (X2),
i) déplacer en rotation la cage (10) par rapport à la première bague (2) de sorte à faire correspondre une encoche de montage (20) avec une alvéole vide de la première rangée d'alvéoles et/ou de la deuxième rangée d'alvéoles,
j) insérer un corps roulant par ladite encoche de montage (20) dans l'alvéole de sorte à emplir l'alvéole,
k) répéter les étapes i) et j) pour insérer les derniers corps roulants (Cr) par une encoche de montage (20) dans les alvéoles vides,
l) faire tourner l'ensemble constitué de la première bague (2), de la cage (10) et des corps roulants (Cr) par rapport à la deuxième bague (3) de sorte que le premier axe central (X1) soit parallèle au deuxième axe central (X2).

17. Procédé de montage selon la revendication 16, comprenant en outre une étape de fixation d'un joint d'étanchéité (26, 27) sur la seconde bague (3) ou la première bague (2).

## Patentansprüche

1. Wälzlagereinheit (1) mit doppelter Reihe von Wälzkörpern, umfassend:
- einen ersten Ring (2), wobei der erste Ring (2) eine erste und eine zweite durchgehende Wälzbahn (4, 5) definiert und der erste Ring (2) eine erste Mittelachse (X1) aufweist, wobei der erste Ring (2) ferner mindestens eine Montage-Ausnehmung (20) umfasst,
- einen zweiten sphärischen Ring (3), wobei der zweite Ring (3) eine dritte und eine vierte durchgehende Wälzbahn (6, 7) definiert, wobei der zweite Ring (3) eine zweite Mittelachse (X2) aufweist, wobei der erste und der zweite Ring (2, 3) radial durch einen Innenraum (E) beabstandet sind, der einerseits von der ersten und zweiten Wälzbahn (4, 5) und andererseits von der dritten und vierten Wälzbahn (6, 7) begrenzt ist,
- eine erste Reihe von Wälzkörpern (8) und eine zweite Reihe von Wälzkörpern (9), die im Innenraum (E) angeordnet sind, wobei die erste Reihe von Wälzkörpern (8) zwischen der ersten und der dritten Wälzbahn (4, 6) angeordnet ist, und die zweite Reihe von Wälzkörpern (9) zwischen der zweiten und der vierten Wälzbahn (5, 7) angeordnet ist, wobei die erste und die zweite Reihe von Wälzkörpern (8, 9) den ersten Ring (2) und den zweiten Ring (3) rotativ koppeln,
- einen Käfig (10), umfassend einen ringförmigen Kranz (11), eine erste Reihe von Vertiefungen (13) und eine zweite Reihe von Vertiefungen (14), zur Aufnahme der Wälzkörper (Cr), wobei die erste Reihe von Vertiefungen (13) auf einer Seite des ringförmigen Kranzes (11) zur Aufnahme der Wälzkörper der ersten Reihe von Wälzkörpern (8) angeordnet ist, wobei die zweite Reihe von Vertiefungen (14) bezüglich des ringförmigen Kranzes (11) der ersten Reihe von Vertiefungen (13) gegenüberliegend zur Aufnahme der Wälzkörper (Cr) der zweiten Reihe von Wälzkörpern (9) angeordnet ist, wobei der Käfig (10) zwischen dem ersten und dem zweiten Ring (2, 3) angeordnet ist,
**dadurch gekennzeichnet, dass** der erste Ring (2) ferner umfasst:
- eine durchgehende Dichtungslagerfläche (16), die eine Rotationsfläche um die erste Mittelachse (X1) bildet und dazu ausgebildet ist, eine Dichtung aufzunehmen,
- eine durchgehende Freifläche (17), die eine Rotationsfläche um die erste Mittelachse (X1) angrenzend an die Dichtungslagerfläche bildet,
- eine axiale Haltefläche (19), die zur Begrenzung einer axialen Bewegung der Wälzkörper entlang der ersten Mittelachse (X1) angepasst ist,
- eine Montagefläche (18) von allgemein rotationssymmetrischer Form um die erste Mittelachse (X1), die sich zwischen der Freifläche (17) und der axialen Haltefläche (19) erstreckt und an die Freifläche (17) und die axiale Haltefläche (19) angrenzt, wobei die Montagefläche (18) die Montage-Ausnehmung (20) zur Montage der Wälzkörper im Innenraum (E) aufweist, wobei die Ausnehmung (20) nicht über die Dichtungslagerfläche (16) hinausragt.

2. Wälzlagereinheit (1) nach Anspruch 1, wobei die Freifläche (17) parallel zur ersten Mittelachse (X1) verläuft.

3. Wälzlagereinheit (1) nach Anspruch 1 oder Anspruch 2, wobei sich die Freifläche (17) parallel zur ersten Mittelachse (X1) erstreckt, und wobei die Dichtungslagerfläche (16) kegelstumpfförmig und relativ zur Freifläche (17) um einen Winkel zwischen 10° und 20° und vorzugsweise um einen Winkel in der Größenordnung von 12° bis 16° geneigt ist.

4. Wälzlagereinheit (1) nach Anspruch 1 oder Anspruch 2, wobei sich die Freifläche (17) parallel zur ersten Mittelachse (X1) erstreckt, und wobei die Dichtungslagerfläche (16) teilweise sphärisch ist.

5. Wälzlagereinheit (1) nach einem der vorhergehenden Ansprüche, wobei die Wälzkörper (Cr) Rollen mit einem Rollenradius (Dr) oder Fässer mit einem axialen Krümmungsradius und einem Umfangs-Krümmungsradius sind.

6. Wälzlagereinheit (1) nach Anspruch 5, wobei die Montage-Ausnehmung (20) eine gekrümmte Lünetten-Form aufweist und wobei die Montage-Ausnehmung (20) teilweise rotationszylindrisch ist.

7. Wälzlagereinheit (1) nach einem der vorhergehenden Ansprüche, wobei die Montage-Ausnehmung (20) in Bezug auf die Montagefläche (18) geneigt ist und wobei die Montage-Ausnehmung (20) teilweise in die axiale Haltefläche (19) mündet.

8. Wälzlagereinheit (1) nach einem der vorhergehenden Ansprüche, wobei der erste Ring (2) ein Innenring ist und wobei der zweite Ring (3) ein Außenring ist.

9. Wälzlagereinheit (1) nach einem der vorhergehenden Ansprüche, wobei die Montagefläche (18) eine einzige Montage-Ausnehmung (20) oder zwei Montage-Ausnehmungen (20) pro Reihe von Vertiefungen aufweist.

10. Wälzlagereinheit (1) nach einem der vorhergehenden Ansprüche, wobei die Dichtungslagerfläche (16) dazu ausgelegt ist, dass eine Dichtung daran reibt.

11. Wälzlagereinheit (1) nach einem der vorhergehenden Ansprüche, wobei die Dichtungslagerfläche (16) eine erste Dichtungslagerfläche (16) bildet, die Freifläche eine erste Freifläche (17) bildet, die axiale Haltefläche eine erste axiale Haltefläche (19) bildet, und die Montagefläche eine erste Montagefläche (18) bildet,
und weiter umfassend:
- eine zweite durchgehende Dichtungslagerfläche (21), die eine Rotationsfläche um die erste Mittelachse (X1) bildet und angepasst ist, eine zweite Dichtung aufzunehmen,
- eine zweite durchgehende Freifläche (22), die eine Rotationsfläche um die erste Mittelachse (X1) angrenzend an die zweite Dichtungslagerfläche bildet,
- eine zweite axiale Haltefläche (23), die angepasst ist, eine axiale Bewegung der Wälzkörper entlang der ersten Mittelachse (X1) zu begrenzen, und
- eine zweite Montagefläche (24) von allgemein ringförmiger oder kegelstumpfförmiger Form um die erste Mittelachse (X1), die sich zwischen der zweiten Freifläche und der zweiten axialen Haltefläche (23) erstreckt und an die zweite Freifläche angrenzt, wobei die zweite Montagefläche eine zweite Montage-Ausnehmung (25) zum Montieren der Wälzkörper im Innenraum (E) aufweist.

12. Wälzlagereinheit (1) nach Anspruch 11, wobei die erste und die zweite Montage-Ausnehmung (20, 25) in Bezug auf die erste Mittelachse (X1) relativ zueinander ausgerichtet sind.

13. Wälzlagereinheit (1) nach Anspruch 11 oder 12, ferner umfassend eine erste Dichtung (26), die an der ersten Dichtungslagerfläche (16) aufgenommen ist, und eine zweite Dichtung (26), die an der zweiten Dichtungslagerfläche (21) aufgenommen ist.

14. Wälzlagereinheit (1) nach einem der vorhergehenden Ansprüche, wobei die erste und die zweite Wälzbahn (4, 5) relativ zur ersten Mittelachse (X1) geneigt sind.

15. Wälzlagereinheit (1) nach einem der vorhergehenden Ansprüche, wobei die dritte und vierte Wälzbahn (6, 7) eine einzige sphärische Wälzbahn bilden, und wobei die erste Wälzbahn (4) und die zweite Wälzbahn (5) eine Form aufweisen, die zu derjenigen der Wälzkörper komplementär ist.

16. Verfahren zur Herstellung einer Wälzlagereinheit (1) nach einem der vorhergehenden Ansprüche, umfassend die Schritte:
a) Bereitstellen eines ersten Rings (2), der eine erste und eine zweite durchgehende Wälzbahn (4, 5) definiert, umfassend eine erste Mittelachse (X1) und umfassend mindestens eine Montage-Ausnehmung (20),
b) Bereitstellen eines zweiten sphärischen Rings (3), der eine dritte und eine vierte durchgehende Wälzbahn (6, 7) definiert, wobei der zweite Ring (3) eine zweite Mittelachse (X2) aufweist,
c) Bereitstellen eines Käfigs (10) mit einem ringförmigen Kranz, einer ersten Reihe von Vertiefungen und einer zweiten Reihe von Vertiefungen, wobei die erste Reihe von Vertiefungen (13) auf einer Seite des ringförmigen Kranzes (11) angeordnet ist, wobei die zweite Reihe von Vertiefungen (14) in Bezug auf den ringförmigen Kranz (11) gegenüber der ersten Reihe von Vertiefungen angeordnet ist,
d) Bereitstellen einer Mehrzahl von Wälzkörpern (Cr),
e) Positionieren des Käfigs (10) relativ zum ersten Ring (2) so, dass die erste Reihe von Vertiefungen der ersten Wälzbahn (4) zugewandt ist und die zweite Reihe von Vertiefungen der zweiten Wälzbahn (5) zugewandt ist,
f) Positionieren einiger Rollkörper (Cr) in einigen Vertiefungen (12), um den Käfig provisorisch auf dem ersten Ring zu halten,
g) Einsetzen der Wälzkörper in die Vertiefungen, bis in jeder Reihe von Vertiefungen einige leere Vertiefungen entstehen,
h) Einsetzen der Anordnung, die aus dem erstem Ring (2), dem Käfig (10) und den Wälzkörpern (Cr) gebildet ist, senkrecht zum zweiten Ring (3), so dass die erste Mittelachse (X1) senkrecht zur zweiten Mittelachse (X2) ist,
i) Drehen des Käfigs (10) relativ zum ersten Ring (2), um eine Montage-Ausnehmung (20) mit einer leeren Vertiefung der ersten Reihe von Vertiefungen oder/und der zweiten Reihe von Vertiefungen in Entsprechung zu bringen,
j) Einsetzen eines Rollkörpers durch die Montage-Ausnehmung (20) in die Vertiefung, um die Vertiefung zu füllen,
k) Wiederholen der Schritte i) und j), um die letzten Wälzkörper (Cr) durch eine Montage-Ausnehmung (20) in die leeren Vertiefungen einzusetzen,
l) Drehen der Anordnung, die aus dem ersten Ring (2), dem Käfig (10) und den Wälzkörpern (Cr) besteht, relativ zum zweiten Ring (3), so dass die erste Mittelachse (X1) parallel zu der zweiten Mittelachse (X2) wird.

17. Montageverfahren nach Anspruch 16, ferner umfassend einen Schritt des Befestigens einer Dichtung (26, 27) an dem zweiten Ring (3) oder dem ersten Ring (2).

## Claims

1. Bearing unit (1) having a double row of rolling bodies including:
- a first ring (2), the first ring (2) defining a first and a second continuous bearing raceway (4, 5) and the first ring (2) including a first central axis (X1), the first ring (2) further comprising at least one mounting notch (20),
- a second spherical ring (3), the second ring (3) defining a third and a fourth continuous bearing raceway (6, 7), said second ring (3) including a second central axis (X2), said first and second rings (2,3) being radially spaced apart from one another by an inner space (E) delimited on the one hand by the first and second bearing raceways (4, 5) and on the other hand by the third and fourth bearing raceways (6, 7),
- a first row of rolling bodies (8) and a second row of rolling bodies (9) arranged in the inner space (E), the first row of rolling bodies (8) being arranged between the first and third bearing raceways (4, 6) and the second row of rolling bodies (9) being arranged between the second and fourth bearing raceways (5, 7), said first and second rows of rolling bodies (8, 9) coupling said first ring (2) to said second ring (3) for rotation therewith,
- a bearing cage (10) comprising an annular band (11), a first row of pockets (13) and a second row of pockets (14), for receiving the rolling bodies (Cr), the first row of pockets (13) being arranged on one side of the annular band (11) in order to receive the rolling bodies of the first row of rolling bodies (8), the second row of pockets (14) being arranged opposite the first row of pockets (13) relative to the annular band (11) in order to receive the rolling bodies (Cr) of the second row of rolling bodies (9), the cage (10) being arranged between the first and the second ring (2, 3),
**characterised in that** the first ring (2) further includes:
- a continuous seal bearing surface (16) forming a surface of revolution about the first central axis (X1), and adapted to receive a seal,
- a continuous clearance surface (17) forming a surface of revolution about the first central axis (X1), adjacent to the seal bearing surface,
- an axial retention surface (19) adapted to limit an axial movement of the rolling bodies along the first central axis (X1),
- a mounting surface (18), having an overall axisymmetric shape about the first central axis (X1), extending between the clearance surface (17) and the axial retention surface (19), and adjacent to the clearance surface (17) and to the axial retention surface (19), the mounting surface (18) comprising the mounting notch (20) for mounting the rolling bodies inside the inner space (E), whereby said notch (20) does not project beyond the seal bearing surface (16).

2. Bearing unit (1) according to claim 1, wherein the clearance surface (17) extends parallel to the first central axis (X1).

3. Bearing unit (1) according to claim 1 or claim 2, wherein the clearance surface (17) extends parallel to the first central axis (X1), and wherein the seal bearing surface (16) is frustoconical and inclined relative to the clearance surface (17) at an angle that lies in the range 10° to 20°, and preferably at an angle of about 12° to 16°.

4. Bearing unit (1) according to claim 1 or claim 2, wherein the clearance surface (17) extends parallel to the first central axis (X1), and wherein the seal bearing surface (16) is partially spherical.

5. Bearing unit (1) according to any of the preceding claims, wherein the rolling bodies (Cr) are rollers comprising a roller radius (Dr) or drums comprising an axial radius of curvature and a circumferential radius of curvature.

6. Bearing unit (1) according to claim 5, wherein the mounting notch (20) includes a curved crescent shape, and wherein the mounting notch (20) is partially a cylinder of revolution.

7. Bearing unit (1) according to any of the preceding claims, wherein the mounting notch (20) is inclined relative to the mounting surface (18), and wherein the mounting notch (20) partially opens out onto the axial retention surface (19).

8. Bearing unit (1) according to any of the preceding claims, wherein the first ring (2) is an inner ring, and wherein the second ring (3) is an outer ring.

9. Bearing unit (1) according to any of the preceding claims, wherein the mounting surface (18) includes a single mounting notch (20), or two mounting notches (20) per row of pockets.

10. Bearing unit (1) according to any of the preceding claims, wherein the seal bearing surface (16) is adapted such that it frictionally bears a seal.

11. Bearing unit (1) according to any of the preceding claims, wherein the seal bearing surface (16) forms a first seal bearing surface (16), the clearance surface forms a first clearance surface (17), the axial retention surface forms a first axial retention surface (19) and the mounting surface forms a first mounting surface (18), and further comprising:
- a second continuous seal bearing surface (21) forming a surface of revolution about the first central axis (X1), and adapted to receive a second seal,
- a second continuous clearance surface (22) forming a surface of revolution about the first central axis (X1), adjacent to the second seal bearing surface,
- a second axial retention surface (23) adapted to limit an axial movement of the rolling bodies along the first central axis (X1), and
- a second mounting surface (24), having an overall annular or frustoconical shape about the first central axis (X1), extending between the second clearance surface and the second axial retention surface (23), and adjacent to the second clearance surface, the second mounting surface comprising a second mounting notch (25) for mounting the rolling bodies inside the inner space (E).

12. Bearing unit (1) according to claim 11, wherein the first and second mounting notches (20, 25) are aligned with one another relative to the first central axis (X1).

13. Bearing unit (1) according to claim 11 or 12, further comprising a first seal (26) received by the first seal bearing surface (16) and a second seal (26) received by the second seal bearing surface (21).

14. Bearing unit (1) according to any of the preceding claims, wherein the first and second bearing raceways (4, 5) are inclined relative to the first central axis (X1).

15. Bearing unit (1) according to any of the preceding claims, wherein the third and fourth bearing raceways (6, 7) form a single bearing raceway that is spherical in shape, and wherein the first bearing raceway (4) and the second bearing raceway (5) have a shape that complements that of the rolling bodies.

16. Method for manufacturing a bearing unit (1) according to any of the preceding claims, comprising the steps of:
a) obtaining a first ring (2) defining a first and a second continuous bearing raceways (4, 5), including a first central axis (X1) and comprising at least one mounting notch (20),
b) obtaining a second spherical ring (3) defining a third and a fourth continuous bearing raceways (6, 7), said second ring (3) including a second central axis (X2),
c) obtaining a cage (10) comprising an annular band, a first row of pockets and a second row of pockets, the first row of pockets (13) being arranged on one side of the annular band (11), the second row of pockets (14) being arranged opposite the first row of pockets relative to the annular band (11),
d) obtaining a plurality of rolling bodies (Cr),
e) positioning the cage (10) relative to the first ring (2) such that the first row of pockets is facing the first bearing raceway (4) and such that the second row of pockets is facing the second bearing raceway (5),
f) positioning some rolling bodies (Cr) in some pockets (12) so as to temporarily maintain the cage on the first ring,
g) inserting the rolling bodies in the pockets until some empty pockets are present in each row of pockets,
h) inserting the assembly formed by the first ring (2), the cage (10) and the rolling bodies (Cr) perpendicular to the second ring (3) such that the first central axis (X1) is perpendicular to the second central axis (X2),
i) rotationally displacing the cage (10) relative to the first ring (2) so as to make a mounting notch (20) correspond with an empty pocket of the first row of pockets and/or of the second row of pockets,
j) inserting a rolling body via said mounting notch (20) into the pocket so as to fill the pocket,
k) repeating steps i) and j) in order to insert the last rolling bodies (Cr) via a mounting notch (20) into the empty pockets,
l) rotating the assembly formed by the first ring (2), the cage (10) and the rolling bodies (Cr) relative to the second ring (3) such that the first central axis (X1) is parallel to the second central axis (X2).

17. Mounting method according to claim 16, further comprising a step of fastening a seal (26, 27) to the second ring (3) or to the first ring (2).
